# EUROPÄISCHE PATENTSCHRIFT

(11) **EP 1 019 278 B1**
(45) Veröffentlichungstag und Bekanntmachung des Hinweises auf die Patenterteilung: **18.12.2002**
(21) Anmeldenummer: 99938280.7
(22) Anmeldetag: 16.07.1999
(51) Int. Cl.: B62D 43/04, B66D 1/06

(54) **ERSATZRADWINDE**
WINCH FOR SPARE WHEEL
TREUIL POUR ROUE DE SECOURS

(30) Priorität: 31.07.1998 DE 19834539
(43) Veröffentlichungstag der Anmeldung: 19.07.2000
(73) Patentinhaber: E.A. STORZ GMBH & CO. KG, D-78532 Tuttlingen (DE)
(72) Erfinder: TRETSCH, Adolf, D-78333 Stockach (DE); GENG, Sigurd, D-78604 Rietheim (DE)
(74) Vertreter: Haecker, Walter, Dipl.-Phys.
(86) Internationale Anmeldenummer: EP9905104
(87) Internationale Veröffentlichungsnummer: WO00007869

(56) Entgegenhaltungen:
- US-A- 3 856 167

## Beschreibung

Damit das Ersatzrad (Reserverad) innerhalb der Fahrzeugkarosserie keinen Stauraum belegt, ist man seit einiger Zeit vor allem bei sogenannten Vans und Geländewagen dazu übergegangen, das Ersatzrad an der Unterseite des Fahrzeugbodens in einer dort angebrachten Halterung unterzubringen. Da Ersatzräder jedoch ziemlich schwer sind, ist es dann eine äußerst mühsame und wegen der Verschmutzung des Ersatzrades sowie der Fahrzeugunterseite unerfreuliche Tätigkeit, das Ersatzrad vom Fahrzeug zu lösen, vor allem aber das Ersatzrad wieder in die Halterung an der Unterseite des Fahrzeugbodens hineinzuheben.

Deshalb wird ein auf dem Markt befindlicher Van mit einer sogenannten Ersatzradwinde ausgerüstet, deren Konstruktion sich aus der gattungsgemäßen US-A-5 368 280 ergibt und die folgenden Aufbau hat: In einem an der Unterseite des Fahrzeugbodens zu befestigenden Windengehäuse ist eine um eine vertikale Achse drehbare Seilrolle zum Aufwickeln eines Hubseils gelagert, welche durch eine vertikal orientierte, mit ihrem oberen Endbereich durch den Fahrzeugboden hindurch in das Fahrzeuginnere hineinragende Antriebswelle über ein im Windengehäuse untergebrachtes Untersetzungsgetriebe antreibbar ist. Das Untersetzungsgetriebe, welches einen außerordentlich komplizierten Aufbau hat, beinhaltet eine Rutschkupplung zur Begrenzung des an der Seilrolle wirksam werdenden Drehmoments. Das von der Seilrolle abzuwickelnde Hubseil ist in horizontaler Richtung durch eine Seitenwand des Windengehäuses hindurch aus diesem herausgeführt und verläuft dann in einem horizontalen Führungsrohr, dessen vom Windengehäuse abgewandter Endbereich um 90° umgebogen ist, so daß der freie Endbereich des Hubseils aus dem Führungsrohr vertikal nach unten austritt. Am freien Ende des Hubseils ist ein Widerlager zum Tragen des Ersatzrades angebracht, wobei dann das Hubseil die Nabenöffnung der Ersatzradfelge durchgreift und dieses Widerlager von unten gegen die Ersatzradfelge anliegt. Das im Fahrzeuginneren liegende obere Ende der Antriebswelle ist mit einem Mehrkant zum Aufsetzen einer Antriebskurbel versehen. Bei dieser bekannten Ersatzradwinde soll das Untersetzungsverhältnis des Untersetzungsgetriebes so groß sein, daß sich das Ersatzrad nicht unbeabsichtigt absenken kann.

Der Erfindung lag die Aufgabe zugrunde, die bekannte Ersatzradwinde hinsichtlich ihres Aufbaus und ihrer Funktionssicherheit zu verbessern und geht infolgedessen aus von einer Ersatzradwinde zum Anheben eines an der Unterseite eines Fahrzeugbodens unterzubringenden Ersatzrades, welche die folgenden Merkmale aufweist: eine vertikal und damit senkrecht zum Fahrzeugboden verlaufende Antriebswelle, eine durch die letztere über ein Untersetzungsgetriebe antreibbare Seilrolle oder -trommel, auf die ein Hubseil aufwickelbar ist, ein mit dem Fahrzeugboden fest verbindbares, das Untersetzungsgetriebe sowie die Seilrolle umschließendes Windengehäuse, aus dem die Antriebswelle nach oben herausragt, sowie ein an einem vertikal verlaufenden, freien Endbereich des Hubseils anbringbares Widerlager zum Tragen des Ersatzrades.

Zur Lösung der Aufgabe wird eine solche Ersatzradwinde erfindungsgemäß derart ausgebildet, daß die Seilrolle bzw. -trommel auf einer horizontal verlaufenden Wickelwelle angeordnet und mit dieser zumindest drehfest verbunden ist, daß das Untersetzungsgetriebe als Schneckengetriebe mit der Schnecke an der Antriebswelle und dem Schneckenrad an der Wickelwelle ausgebildet ist, und daß die Antriebs- und die Wickelwelle in dem Windengehäuse gelagert sind, welches an seiner Unterseite eine Austrittsöffnung für den vertikal verlaufenden, freien Hubseilendbereich aufweist, wobei diese Austrittsöffnung vorzugsweise mit einer vertikal ausgerichteten Seilführung versehen ist.

Ein Schneckengetriebe ist in viel höherem Maße selbsthemmend als andere Untersetzungsgetriebe; ferner erfordert die Anordnung der Seilrolle bzw. -trommel an der horizontal verlaufenden Wickelwelle keine oder zumindest keine nennenswerte Umlenkung des Hubseils, da sich letzteres in vertikaler Richtung von der Seilrolle bzw. -trommel abwickeln läßt. Dadurch wird auch der Nachteil der Ersatzradwinde nach der US-A-5 368 280 vermieden, welcher darin zu sehen ist, daß bei dieser bekannten Konstruktion das das Hubseil aufnehmende Führungsrohr im Bereich seiner Umlenkung die gesamte Hubkraft aufnehmen muß, was entweder ein außerordentlich massiv dimensioniertes Führungsrohr erforderlich macht oder die Gefahr in sich birgt, daß das Führungsrohr unter der Hublast abknickt, wodurch die Ersatzradwinde unbrauchbar wird. Auch baut die erfindungsgemäße Ersatzradwinde viel kompakter als die geschilderte bekannte Konstruktion, ganz abgesehen davon, daß, auch wegen der Verwendung eines viel weniger komplizierten Untersetzungsgetriebes, sich die erfindungsgemäße Ersatzradwinde kostengünstiger herstellen und montieren läßt.

Die Verwendung eines als Schneckengetriebe ausgebildeten Untersetzungsgetriebes bei Ersatzradwinden ist zwar aus dem DE-U-90 15 941 bekannt, jedoch weist diese bekannte Konstruktion in eine völlig andere Richtung als das Grundprinzip der Konstruktion der erfindungsgemäßen Ersatzradwinde: Bei der Winde nach dem DE-U-90 15 941 ist eine Seiltrommel mit horizontaler Achse einerseits in einem vertikal verlaufenden, wandartigen Fahrzeugteil drehbar gelagert und andererseits in einer im Querabstand von diesem Fahrzeugteil angeordneten, gleichfalls vertikal verlaufenden Befestigungsplatte, welche die eine Wand eines Getriebegehäuses bildet und, z. B. mittels Schrauben, mit dem genannten Fahrzeugteil fest zu verbinden ist. In dem Getriebegehäuse befinden sich ein mit der Seiltrommel fest verbundenes Schneckenrad eines Schneckengetriebes sowie dessen Schnecke, deren Achse horizontal verläuft und welche mit einer Handkurbel antreibbar sein soll. Von der im wesentlichen zwischen dem Getriebegehäuse und dem genannten Fahrzeugteil freiliegenden Seiltrommel läßt sich das Hubseil vertikal nach unten abwickeln.

Nach der grundsätzlichen Lehre des DE-U-90 15 941 soll diese bekannte Ersatzradwinde kein Windengehäuse aufweisen (siehe Seite 4, Zeilen 1 - 4), sondern nur ein lediglich das Schneckengehäuse umschließendes Getriebegehäuse, was schon den Nachteil mit sich bringt, daß das aufgewickelte Hubseil, die Seiltrommel sowie die diese lagernden Lagerflächen völlig verschmutzen, wenn diese bekannte Ersatzradwinde nicht im Fahrzeuginneren untergebracht wird. Ferner legt es das DE-U-90 15 941 wegen seiner mit horizontaler Achse unterhalb der Seiltrommel angeordneten Antriebswelle nicht nahe, die Konstruktion so zu gestalten, daß die Ersatzradwinde vom Inneren eines Fahrzeugs aus bedient werden kann oder gar daß sich die Antriebswelle durch einen Fahrzeugboden hindurch in das Fahrzeuginnere erstreckt.

Bevorzugte Ausführungsformen der erfindungsgemäßen Winde sehen auch noch Mittel vor, um das weggestaute Ersatzrad federnd von unten gegen den Fahrzeugboden (oder einen am Fahrzeugboden vorgesehenen Anschlag) anzupressen; diese Ausführungsformen zeichnen sich dadurch aus, daß das das Ersatzrad tragende Widerlager ein von unten gegen das Ersatzrad anlegbares Tragelement zum Tragen des Ersatzrades, ein am Hubseil festlegbares Widerlagerelement sowie zwischen diesem und dem Tragelement ein in vertikaler Richtung elastisches Federelement zum Verspannen des Ersatzrades gegen den Fahrzeugboden aufweist, so daß das Ersatzrad auch dann noch fest gegen den Fahrzeugboden angepreßt wird, wenn sich das Hubseil im Laufe der Zeit etwas längt und/oder sich das Schneckenrad aufgrund der im Fahrzeugbetrieb unvermeidbaren, ständigen Erschütterungen im Laufe der Zeit geringfügig dreht. Das die Verspannung des Ersatzrades am Fahrzeugboden bewirkende Federelement könnte z. B. eine das Hubseil umschließende Schraubenfeder oder ein eine Seil-Durchtrittsöffnung aufweisender Körper aus einem elastomeren Material sein.

Damit die Antriebswelle noch zusätzlich gesichert ist und/oder nicht unbeabsichtigt verdreht werden kann, empfiehlt es sich, eine lösbare Blockiervorrichtung für die Antriebswelle vorzusehen. Für eine solche Blockiervorrichtung sind die unterschiedlichsten Konstruktionen denkbar, eine besonders billig herzustellende und funktionssichere Blockiervorrichtung zeichnet sich jedoch dadurch aus, daß sie ein erstes Blockierelement mit einer die Antriebswelle umschließenden Planverzahnung sowie ein zweites Blockierelement mit wenigstens einem Vorsprung zum Eingreifen in die Planverzahnung aufweist, wobei das eine Blockierelement unverdrehbar gehalten und das andere Blockierelement drehfest mit der Antriebswelle verbunden, jedoch in Achsrichtung der Antriebswelle verschiebbar ist.

Bei Ausführungsformen mit einer Blockiervorrichtung für die Antriebswelle könnten deren Blockierelemente grundsätzlich außerhalb des Windengehäuses angeordnet sein, es empfiehlt sich jedoch, auch die beiden Blockierelemente im Windengehäuse anzuordnen und außerdem das eine Blockierelement fest mit dem Windengehäuse zu verbinden. Zur weiteren Erhöhung der Funktionssicherheit bzw. zur Vereinfachung der Betätigung der Winde wird vorgeschlagen, diese so zu gestalten, daß durch Aufsetzen der Antriebskurbel auf die Antriebswelle automatisch die Blockiervorrichtung für die Antriebswelle gelöst wird; solche Ausführungsformen zeichnen sich aus durch eine am oberen Ende der Antriebswelle angeordnete Kurbelansetzstelle zum Aufsetzen der Antriebskurbel, eine die beiden Blockierelemente im Eingriff miteinander haltende Feder sowie ein durch Aufsetzen der Antriebskurbel betätigbares Ausrückelement zum Abheben des verschiebbaren Blockierelements vom anderen Blockierelement. Das Ausrückelement könnte dabei z. B. ein vertikal ausgerichteter und vertikal verschiebbarer Stift sein, vorteilhafter ist es jedoch, wenn das Ausrückelement als auf der Antriebswelle längsverschiebbar gelagerte, das Windengehäuse durchsetzende, durch Aufsetzen der Antriebskurbel in Richtung auf das Gehäuseinnere vorschiebbare und dabei das verschiebbare Blockierelement gegen die Wirkung der Feder mitnehmende Buchse gestaltet ist, welche durchaus auch über einen oder mehrere derartige Stifte verfügen kann, die auf das verschiebbare Blockierelement einwirkt bzw. einwirken.

Damit keine besonderen Maßnahmen ergriffen werden müssen, um die die beiden Blockierelemente im Eingriff miteinander haltende Feder an Ort und Stelle zu halten, wird empfohlen, das verschiebbare Blockierelement als von der Antriebswelle durchsetzte Scheibe zu gestalten, zwischen der und einem an der Antriebswelle unverschiebbar angebrachten Widerlage eine die Antriebswelle umfassende Druckfeder, insbesondere eine Schraubenfeder, angeordnet ist, wobei die Konstruktion ganz besonders einfach wird, wenn die Schnecke Bestandteil des Federwiderlagers ist.

Schließlich läßt sich ein unerwünschter Verschleiß des Hubseiles dadurch verhindern, daß man die in der Unterseite des Windengehäuses vorgesehene Austrittsöffnung für das Hubseil mit einer vertikal ausgerichteten Seilführung versieht.

Bei der in der Praxis eingesetzten Ersatzradwinde nach der US-A-5 368 280 werden die Tragkräfte für das weggestaute Ersatzrad ausschließlich vom Hubseil, der Seilrolle und dem Untersetzungsgetriebe aufgenommen; wenn das Hubseil reißt, ein Bestandteil des Untersetzungsgetriebes bricht oder, wie in der Praxis bereits vorgekommen, die scheibenartige Seilrolle bricht, löst sich das Ersatzrad vom Fahrzeug, was während der Fahrt katastrophale Folgen mit sich bringen kann. Um dieses Risiko auszuschließen, ist bei einer bevorzugten Ausführungsform der erfindungsgemäßen Winde zur Verhinderung eines unbeabsichtigten Absenkens des weggestauten Ersatzrades eine unmittelbar mit dem Ersatzrad-Widerlager zusammenwirkende, lösbare Absenksicherung vorgesehen. Um diese Absenksicherung nicht separat betätigen zu müssen, empfehlen sich Konstruktionen, bei denen die Absenksicherung derart mit der Blockiervorrichtung für die Antriebswelle der Winde gekoppelt ist, daß ein Lösen bzw. Aktivieren dieser Blockiervorrichtung ein Lösen bzw. Aktivieren der Absenksicherung bewirkt.

Verfügt das Ersatzrad-Widerlager über ein von unten gegen das Ersatzrad anlegbares Tragelement zum Tragen des Ersatzrades, könnte die Absenksicherung an diesem Tragelement angreifen; sie müßte dann jedoch im Zweifelsfalle über durch die Nabenöffnung der Ersatzradfelge hindurchgreifende Sicherungselemente verfügen. Zur Erzielung einer möglichst einfachen Konstruktion wird deshalb erfindungsgemäß vorgeschlagen, die Winde so zu gestalten, daß das Ersatzrad-Widerlager einen vom freien Endbereich des Hubseils durchsetzten Schaft aufweist, an dem der von unten gegen das Ersatzrad anlegbare Ersatzradträger vorgesehen ist, daß am Windengehäuse eine vertikal nach unten verlaufende gehäusefeste Führung für diesen Schaft vorgesehen ist, in welche der Widerlagerschaft von unten einfahrbar ist und bei weggestautem Ersatzrad eingreift, und daß die Absenksicherung einen in die Widerlagerschaft-Führung hineinbewegbaren Riegel zum Untergreifen eines am Widerlagerschaft vorgesehenen Anschlags aufweist. Dabei empfiehlt es sich, eine diesen Riegel in Richtung auf seine Wirkstellung vorspannende Feder vorzusehen, um die Funktionssicherheit der Winde noch weiter zu erhöhen.

Da sich über ein Schneckengetriebe durch eine im Umgang mit einer solchen Winde ungeübte Person hohe Kräfte aufbauen lassen, die zu einer Zerstörung der Winde führen könnten, wenn die Bedienungsperson die Handkurbel zu unbedacht betätigt, wird des weiteren vorgeschlagen, die erfindungsgemäße Winde durch eine das an der Seilrolle bzw. -trommel erzeugbare Drehmoment begrenzende, nur in Hubrichtung wirksame Rutschkupplung zwischen Antriebswelle und Seilrolle bzw. - trommel zu ergänzen. Das Risiko, daß eine ungeübte Bedienungsperson die Winde beschädigt, läßt sich dann noch weiter minimieren, indem man die Rutschkupplung zwischen Antriebswelle und der auf letzterer drehbar gelagerten Schnecke vorsieht, denn dann kann weder das Schneckenrad, noch die Seilrolle bzw. -trommel überbeansprucht werden.

Beim Ablassen des Ersatzrades auf den Boden könnte es insbesondere bei einer scheibenartigen Seilrolle vorkommen, daß das spannungsfrei werdende Hubseil aus der Seilrolle herausspringt, wodurch die Winde unbrauchbar werden würde. Deshalb zeichnen sich bevorzugte Ausführungsformen der erfindungsgemäßen Winde durch eine ein Herausspringen des Hubseils aus der Seilrolle bzw. -trommel verhindernde Hubseilsicherung aus. Eine solche Hubseilsicherung läßt sich z. B. durch ein oder mehrere Sicherungsbleche verwirklichen, welche innerhalb des Windengehäuses angeordnet sind und die Seilrolle möglichst über deren ganzen Umfang so umschließt, daß auch ein schlaff gewordenes Hubseil nicht aus der Seilrolle herausspringen kann. Wie sich aus dem folgenden noch ergeben wird, kann auch ein Teil des Windengehäuses selbst so gestaltet werden, daß es die gewünschte Hubseilsicherung ganz oder teilweise bildet, zu einem Teil kann die Hubseilsicherung aber auch durch ein Windenelement mit einer anderen Hauptfunktion bewirkt werden.

Wie z. B. das DE-U-90 15 941 erkennen läßt, sollte die Drehrichtung der Seilrolle bzw. -trommel für eine Aufwärts- bzw. Abwärtsbewegung des Ersatzrades definiert werden, um Bedienungsfehler ungeübter Bedienungspersonen zu verhindern, denn sonst besteht auch die Möglichkeit, daß beim Herablassen des Ersatzrades nach einer bestimmten Anzahl von Drehungen der Betätigungskurbel das Ersatzrad wieder nach oben gezogen wird, wenn die Bedienungsperson die Kurbel weiter dreht. Deshalb weisen besonders vorteilhafte Ausführungsformen der erfindungsgemäßen Winde eine bei abgelassenem Ersatzrad wirksam werdende Überdrehsicherung für die Seilrolle bzw. -trommel auf, um zu gewährleisten, daß, wenn das Hubseil voll abgewickelt ist, sich die Winde mit gleichbleibender Drehrichtung der Kurbel nicht mehr weiter betätigen läßt. Eine solche Überdrehsicherung könnte beispielsweise über einen Taster verfügen, welcher prüft, ob sich auf der Seilrolle bzw. -trommel noch ein aufgewickelter Hubseilbereich befindet und, wenn dies nicht der Fall ist, eine Blockiervorrichtung für die Seilrolle auslöst. Besonders einfach und funktionssicher wird die Überdrehsicherung jedoch dann, wenn sie eine mit der Seilrolle bzw. -trommel zusammenwirkende Sperrklinke aufweist, welche an einem Windengehäuse-festen Teil in Richtung auf eine Klinken-Wirkstellung beweglich gehalten ist, wenn man ferner eine die Sperrklinke in Richtung auf deren Wirkstellung vorspannende Klinkenfeder vorsieht, unter deren Wirkung die Sperrklinke bei die Seilrolle bzw. -trommel umschlingendem Hubseil gegen letzteres anliegt, und wenn schließlich an der Seilrolle bzw. -trommel ein Anschlag zum Zusammenwirken mit der Sperrklinke derart angeordnet wird, daß das die Seilrolle bzw. -trommel umschlingende Hubseil diesen Anschlag abdeckt sowie bei abgelassenem Ersatzrad freilegt, so daß bei freiliegendem Anschlag ein Weiterdrehen der Seilrolle bzw. -trommel in Abwickelrichtung durch die Sperrklinke verhindert wird. Diese gefederte Sperrklinke kann dann auch zu einem Teil die Funktion einer Hubseilsicherung auf der Seilrolle bzw. -trommel übernehmen.

Die Sperrklinke könnte z. B. die Gestalt eines bezüglich der Seilrollenachse radial nach innen verschiebbar geführten und gefederten flachen Schiebers haben, welcher in Abwesenheit eines auf die Seilrolle aufgewickelten Hubseilbereichs in eine sich in Richtung der Seilrollenachse erstreckende Nut der Seilrolle einfällt - ein solcher Schieber könnte sich bei einer Seiltrommel auch über die gesamte axiale Länge des Wickelbereichs der Trommel erstrecken -, bevorzugt werden jedoch Ausführungsformen, bei denen die Sperrklinke um eine Windengehäuse-feste Klinkenachse, welche parallel zur Seilrollenachse verläuft, schwenkbar und entgegen der Abwickelrichtung orientiert ist, denn dann muß die Überdrehsicherung nicht "entschärft" werden, um das Hubseil mit umgekehrter Drehrichtung der Handkurbel wieder aufwickeln zu können. Auch eine solche schwenkbare Sperrklinke kann natürlich so ausgebildet werden, daß sie sich in axialer Richtung einer Seiltrommel über die gesamte Länge des Wickelbereichs der Trommel erstreckt und so das Hubseil überall am Herausspringen aus der Seiltrommel hindert.

Weitere Merkmale, Vorteile und Einzelheiten der Erfindung ergeben sich aus der beigefügten zeichnerischen Darstellung sowie der nachfolgenden Beschreibung zweier besonders vorteilhafter Ausführungsformen der erfindungsgemäßen Ersatzradwinde; in der Zeichnung zeigen:
- Fig. 1: einen vertikalen Schnitt durch die erste Ausführungsform;
- Fig. 2: eine Draufsicht auf das Tragelement des in Fig. 1 als Ganzes dargestellten Ersatzrad-Widerlagers;
- Fig. 3: einen der Fig. 1 entsprechenden Schnitt durch die zweite Ausführungsform der erfindungsgemäßen Winde und
- Fig. 4: einen Teil eines Schnitts nach der Linie 4-4 in Fig. 3.

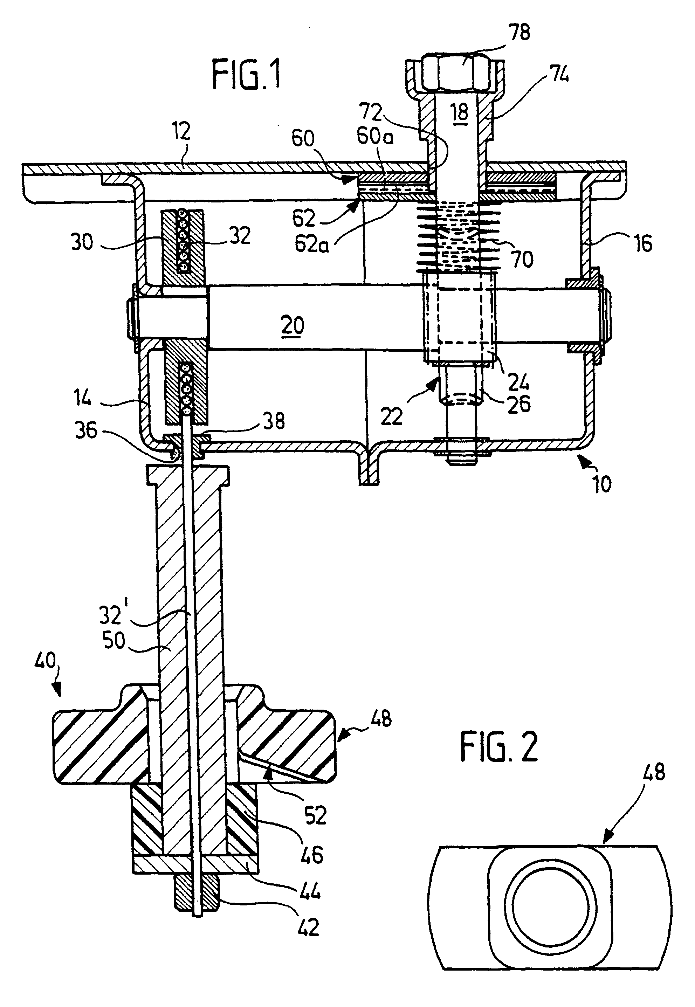

Die Fig. 1 zeigt ein aus miteinander verschweißten Blechteilen hergestelltes, ungefähr quaderförmiges Windengehäuse 10 mit einem Deckel 12, einem linken Gehäuseunterteil 14 und einem rechten Gehäuseunterteil 16. Das Oberteil des Windengehäuses 10, bei der gezeichneten Ausführungsform also der Deckel 12, ist so gestaltet, daß er sich an der Unterseite des Fahrzeugbodens befestigen läßt, z. B. mittels Schrauben und nicht dargestellter Löcher im Deckel 12. Im Windengehäuse 10 sind zwei Wellen drehbar und axial unverschiebbar gelagert, nämlich eine mit vertikaler Achse angeordnete Antriebswelle 18 und eine mit horizontaler Achse angeordnete Wickelwelle 20, wobei die letztere in Fig. 1 hinter der Antriebswelle 18 verläuft. Der Triebverbindung zwischen Antriebswelle 18 und Wickelwelle 20 dient ein Schneckengetriebe 22 mit einer auf der Antriebswelle 18 befestigten Schnecke 24 und einem auf der Wickelwelle 20 befestigten Schneckenrad 26.

Auf der Wickelwelle 20 ist außerdem eine Seilrolle 30 befestigt, auf die in dem in Fig. 1 dargestellten Zustand ein Hubseil 32 - mit Ausnahme eines freien Endbereichs 32' dieses Hubseils - aufgewickelt ist, welches sich durch Drehen der Wickelwelle 20 von der Seilrolle 30 abwickeln läßt (das eine, nicht besonders dargestellte Ende des Hubseils 32 soll in geeigneter Weise an der Seilrolle 30 befestigt sein).

Das linke Gehäuseunterteil 14 hat unterhalb der Seilrolle 30 eine Öffnung 36, in der ein ösenartiges Seilführungselement 38 festgelegt ist, und das Hubseil 32 ist durch eine Führungsöffnung des Elements 38 hindurchgeführt. Der freie Endbereich 32' des Hubseils 32 trägt ein als Ganzes mit 40 bezeichnetes Widerlager zum Tragen eines nicht dargestellten Ersatzrades. Das Widerlager 40 umfaßt ein am unteren Ende des Hubseils 32 in geeigneter Weise fest angebrachtes Widerlagerelement 42, eine sich auf dem letzteren abstützende Stützscheibe 44, ein sich auf dieser abstützendes Federelement 46 und ein sich auf dem letzteren abstützendes Tragelement 48, welches das Ersatzrad tragen soll. Bei der dargestellten bevorzugten Ausführungsform ist noch ein Schaft 50 vorgesehen, welcher vom Hubseil durchsetzt wird und seinerseits durch das Tragelement 48 und das Federelement 46 hindurchgreift sowie sich gleichfalls auf der Stützscheibe 44 abstützt. Bei dem Federelement 46 handelt es sich um einen ringförmigen Körper aus einem elastomeren Material, bei dem Tragelement 48 vorzugsweise um ein Kunststoff-Spritzgußteil.

Wie die in Fig. 2 dargestellte Draufsicht auf das Tragelement 48 erkennen läßt, weist dessen Umfang eine von einer Kreisform abweichende Gestalt auf - bei der bevorzugten Ausführungsform hat das Tragelement 48 in der Draufsicht ungefähr die Gestalt eines verhältnismäßig schmalen Rechtecks. Außerdem läßt der in Fig. 1 dargestellte Schnitt durch das Tragelement 48 erkennen, daß sich dieses gegenüber dem Schaft 50 und damit gegenüber dem freien Endbereich 32' des Hubseils infolge einer Aussparung 52 gemäß Fig. 1 im Uhrzeigersinn etwas kippen läßt, wobei sich der Sinn dieser Gestaltungsmerkmale des Tragelements 48 der folgenden Beschreibung entnehmen läßt.

Das nicht dargestellte Ersatzrad hat eine zentrale, kreisrunde Nabenöffnung, durch die sich bei abgewickeltem Hubseil 32 und am Boden liegenden Ersatzrad das Widerlager 40 von oben hindurchführen läßt, nachdem das Tragelement 48 in der vorstehend beschriebenen Weise gekippt wurde, so daß es die Nabenöffnung passieren kann - das Federelement 46 und die Stützscheibe 44 sollen Außendurchmesser haben, welche kleiner sind als der Durchmesser der Nabenöffnung. Andererseits soll der größte Außendurchmesser des Tragelements 48 größer sein als der Durchmesser der Nabenöffnung, so daß das Tragelement 48 das Ersatzrad tragen kann, wenn beim Anziehen des Hubseils 32 das Tragelement 48 seine in Fig. 1 dargestellte Position einnimmt - das Ersatzrad ruht dann von oben auf dem Widerlager 40, nämlich dessen Tragelement 48.

Alternativ könnte die erfindungsgemäße Ersatzradwinde aber auch so ausgebildet sein, daß sich das Widerlagerelement 42 einfach am Hubseil befestigen und von diesem lösen läßt, damit nur das Hubseil durch die Nabenöffnung hindurchgeführt werden muß, worauf das Widerlagerelement 42 am Hubseil befestigt wird.

Die dargestellte bevorzugte Ausführungsform der erfindungsgemäßen Ersatzradwinde hat eine lösbare Blockiervorrichtung zum Blockieren der Antriebswelle 18. Zu dieser Blockiervorrichtung gehören zwei Blockierelemente 60 und 62, welche eine Art Zahnkupplung bilden; bei der dargestellten Ausführungsform handelt es sich bei beiden Blockierelementen jeweils um eine mit einer zentralen Öffnung versehene Scheibe mit einer die Antriebswelle 18 ringförmig umschließenden Planverzahnung 60a bzw. 62a, wobei in dem in Fig. 1 dargestellten Zustand diese beiden Planverzahnungen ineinandergreifen. Das obere Blockierelement 60 ist am Deckel 12, beispielsweise durch Schweißen, befestigt, während das untere Blockierelement 62 in Richtung der Achse der Antriebswelle 18 auf dieser verschiebbar geführt ist, mit der Antriebswelle jedoch drehfest verbunden sein soll, beispielsweise durch einen nicht dargestellten, an der Antriebswelle 18 vorgesehenen und sich in deren Längsrichtung erstreckenden Keil, welcher in eine entsprechende Nut des Blockierelements 62 eingreift.

Eine als Schraubenfeder ausgebildete und vorgespannte Druckfeder 70, welche von der Antriebswelle 18 durchsetzt und gehalten wird, stützt sich unten auf der Schnecke 24 und oben gegen die Unterseite des verschiebbaren Blockierelements 62 ab und hält in dem in Fig. 1 dargestellten Zustand die Planverzahnungen der beiden Blockierelemente 60 und 62 im Eingriff miteinander, so daß sich die Antriebswelle 18 in diesem Zustand nicht drehen kann.

Der Deckel 12 hat eine Öffnung 72 für den Durchtritt der Antriebswelle 18 sowie einer auf dieser drehbar und axial verschieblich gelagerten Ausrückbuchse 74. Auch der nicht dargestellte Fahrzeugboden hat eine Öffnung für den Durchtritt der Antriebswelle 18 und der Ausrückbuchse 74, so daß die oberen Endbereiche der Antriebswelle 18 und der Ausrückbuchse 74 im Fahrzeuginnern liegen und von dort aus zugänglich sind. Am oberen Ende der Antriebswelle 18 ist eine als Sechskant 78 gestaltete Ansetzstelle für eine nicht dargestellte, auf die Antriebswelle 18 aufsetzbare Handkurbel vorgesehen, so daß beim Aufsetzen dieser Handkurbel auf die Antriebswelle 18 die Ausrückbuchse 74 nach unten geschoben wird; dabei drückt die Ausrückbuchse 74 das untere, verschiebbare Blockierelement 62 entgegen der Wirkung der Druckfeder 70 so weit nach unten, daß die Planverzahnungen der beiden Blockierelemente 60 und 62 außer Eingriff kommen und sich infolgedessen die Antriebswelle 18 mit Hilfe der Handkurbel drehen läßt. Wird die letztere von der Antriebswelle 18 abgenommen, drückt die Druckfeder 70 das untere, verschiebbare Blockierelement 62 wieder nach oben, so daß beim Abnehmen der Handkurbel die Blockiervorrichtung selbsttätig aktiviert wird. Zweckmäßigerweise wird ein solcher Paßsitz zwischen dem Sechskant 78 und einem Innensechskant der Handkurbel vorgesehen, daß die Druckfeder 70 nicht imstande ist, die auf die Antriebswelle 18 aufgesetzte Handkurbel vom Sechskant 78 herunterzuschieben, es könnten aber auch besondere Sicherungsmittel für die Handkurbel vorgesehen werden.

Die Ersatzradwinde ist nun so gestaltet, daß in der oberen Endposition des Ersatzrades dieses mit seinem Reifen oder mit seiner Felge gegen den Fahrzeugboden oder das Windengehäuse 10 anliegt, wobei beim Anheben des Ersatzrades die Antriebswelle 18 so lange gedreht wird, bis das Federelement 46 in vertikaler Richtung elastisch deformiert und dadurch unter Spannung gesetzt wird, so daß das Ersatzrad bei blockierter Antriebswelle 18 stets sicher in seiner oberen Endposition gehalten wird.

Es versteht sich von selbst, daß in die Unterseite des Deckels 12 eine Planverzahnung eingeprägt werden könnte, welche mit der Planverzahnung des Blockierelements 62 zusammenwirkt; in diesem Fall könnte das Blockierelement 60 entfallen. Außerdem könnte an die Stelle des mit einer ringförmigen Planverzahnung versehenen Blockierelements 62 auch ein anders gestaltetes Blockierelement treten, welches z. B. nur einen einzigen Vorsprung zum Eingreifen in die gehäusefeste Planverzahnung aufweist. Alternativ könnte auch am Deckel 12 nur ein einziger Vorsprung vorgesehen sein, welcher in die Planverzahnung des Blockierelements 62 eingreift. Schließlich ist auch denkbar, daß die Ausrückbuchse 74 fest mit dem verschiebbaren Blockierelement 62 verbunden ist.

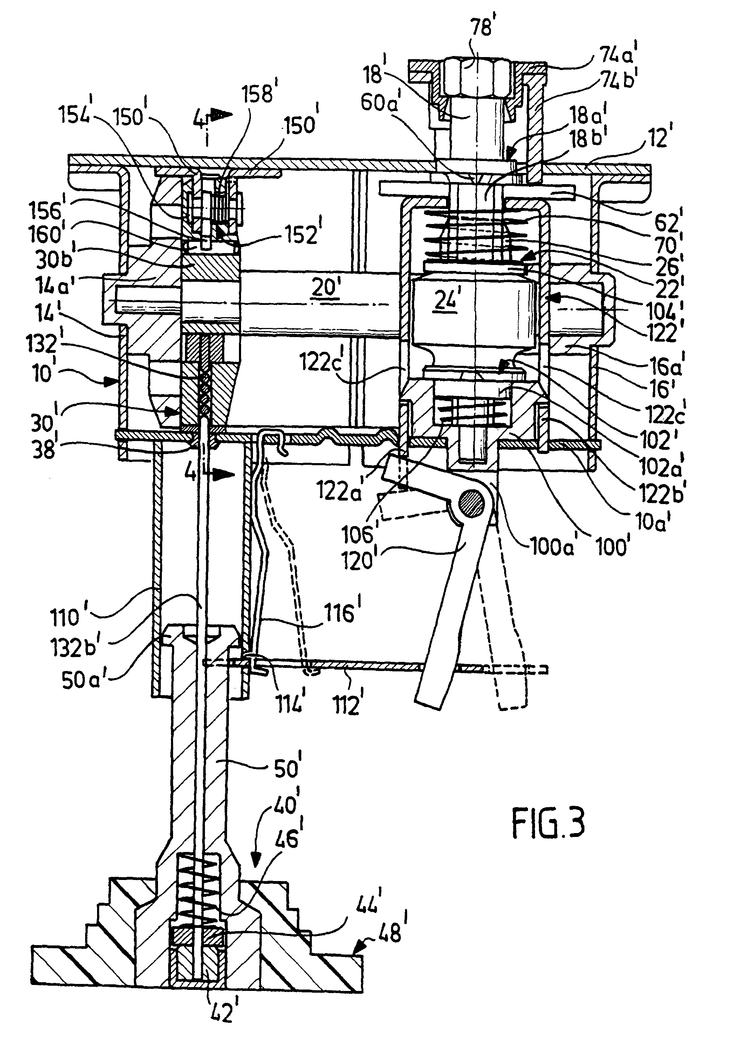

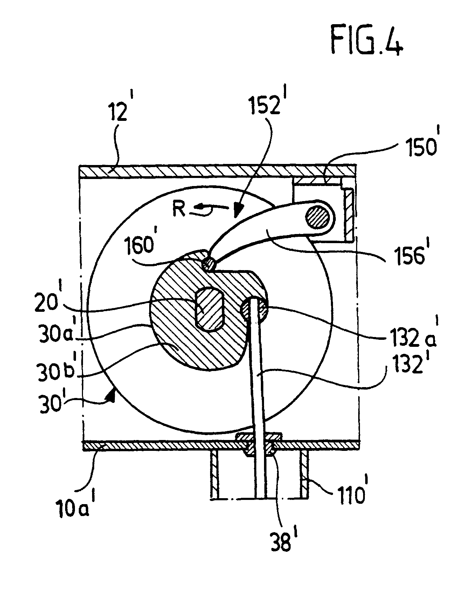

Bei der in den Figuren 3 und 4 dargestellten Konstruktion handelt es sich um die bevorzugte, zweite Ausführungsform, welche sich von der ersten Ausführungsform gemäß Fig. 1 durch einige zusätzliche Optionen unterscheidet, nicht aber im Grundaufbau. Deshalb wurden in den Figuren 3 und 4 für entsprechende Teile dieselben Bezugszeichen wie in den Figuren 1 und 2 verwendet, jedoch unter Hinzufügung eines Strichs.

Bei der zweiten Ausführungsform tritt an die Stelle der in Fig. 1 gezeigten Ausrückbuchse 74 eine zweiteilige Einheit, bestehend aus einer oberen Buchse 74a' und einer eine Abwärtsbewegung der letzteren auf die Blockiervorrichtung übertragenden unteren Ausrückbuchse 74b', welche mit einem oberen Bereich die Buchse 74a' ringförmig umgibt; an diesen oberen Bereich schließen sich z. B. drei über den Umfang der unteren Ausrückbuchse gleichmäßig verteilte, nach unten ragende stiftförmige Bereich der unteren Ausrückbuchse an (von denen die Fig. 3 nur einen einzigen erkennen läßt), welche jeweils ein Führungsloch im Deckel 12' des Windengehäuses 10' durchgreifen.

Die Antriebswelle 18' ist mit dem oberen Bereich eines kreisrunden, abgestuften Bundes 18a' in einem kreisrunden Loch des Deckels 12' drehbar gelagert, wobei der im Durchmesser größere untere Bereich des Bundes 18a' eine Verschiebung der Antriebswelle 18' nach oben verhindert. Unterhalb des Bundes 18a' weist die Antriebswelle 18' an ihrem Umfang eine Abflachung 18b' auf, welche eine zur Antriebswellenachse parallel verlaufende Ebene bildet und dazu dient, verschiedene Elemente drehgesichert auf der Antriebswelle zu halten. Eines dieser Elemente ist das scheibenförmige Blockierelement 62', welches eine zentrale Öffnung besitzt, deren Gestalt dem Querschnitt der Antriebswelle 18' im Bereich der Abflachung 18b' entspricht, so daß das Blockierelement 62' längsverschiebbar auf der Antriebswelle gelagert, dieser gegenüber jedoch unverdrehbar ist. Die Unterseite des Deckels 12' wurde durch Prägen mit einer die Antriebswelle 18' ringförmig umschließenden Planverzahnung 60a' versehen, von welcher die Fig. 1 nur einen einzigen Zahn erkennen läßt; die Zähne der Planverzahnung 60a' liegen radial außerhalb des in seinem unteren Bereich aufgebrochen dargestellten Bundes 18a' und greifen in dem in Fig. 3 dargestellten Zustand der Winde in eine nicht dargestellte, die Antriebswelle 18' ringförmig umschließende Planverzahnung des Blockierelements 62' ein, so daß in diesem Zustand die Antriebswelle 18' nicht verdreht werden kann.

Mit ihrem unteren Ende ist die Antriebswelle 18' in einer Lagerbuchse 100' drehbar und gegen ein Verschieben nach unten gesichert gelagert; diese Lagerbuchse ist mit einem einen Lagerbock 100a' bildenden Ansatz versehen und mit diesem in eine Öffnung eines Gehäusebodens 10a' des Windengehäuses 10' eingesetzt. Die Form dieser Öffnung des Gehäusebodens 10a' und des Querschnitts des Lagerbocks 100a' sind gleich und weichen von der Kreisform ab, so daß sich die Lagerbuchse 100' nicht verdrehen läßt - durch die Antriebswelle 18' wird sie auch an einer axialen Verschiebung gehindert.

Auf dem mit der Abflachung 18b' versehenen Bereich der Antriebswelle 18' sind ferner angeordnet die Schnecke 24' des Schneckengetriebes 22', ein scheibenförmiger Mitnehmer 102a' einer als Ganzes mit 102' bezeichneten Rutschkupplung sowie eine Widerlagerscheibe 104' für eine Schraubendruckfeder 70', wobei eine nicht gezeigte Durchtrittsöffnung der Schnecke 24' kreisrund ist und eine gleichfalls nicht gezeigte Durchtrittsöffnung des Mitnehmers 102a' in ihrer Querschnittsform in derselben Weise von der Kreisform abweichen wie der Querschnitt der Antriebswelle 18' im Bereich der Abflachung 18b', über welche der Mitnehmer 102a' gegen ein Verdrehen relativ zur Antriebswelle 18' gesichert wird, während die Schnecke 24' über die Rutschkupplung 102' angetrieben wird.

Auf einer im Windengehäuse 10' mit horizontal verlaufender Achse drehbar gelagerten Wickelwelle 20' ist ein Schneckenrad 26' des Schneckengetriebes 22' gegen Verdrehen gesichert angeordnet, welches sich mit der Schnecke 24' ständig im Eingriff befindet (in Fig. 3 liegen die Wickelwelle 20' und das Schneckenrad 26' hinter der Antriebswelle 18' und der Schnecke 24').

Die Lagerbuchse 100' für die Antriebswelle 18' bildet ein unteres Widerlager für eine von der Antriebswelle durchsetzte Druckfeder 106', welche als Schraubenfeder gezeichnet wurde, vorzugsweise jedoch als Tellerfederpaket gestaltet ist und den Mitnehmer 102a' im Eingriff mit dem ein Gegenstück der Rutschkupplung 102' bildenden unteren Bereich der Schnecke 24' hält - wegen des ständigen Eingriffs der Schnecke 24' in das Schneckenrad 26' kann die Druckfeder 106' die Schnecke nicht nach oben verschieben. Die Rutschkupplung 102' verfügt an der gemäß Fig. 3 unteren Seite der Schnecke 24' und an der Oberseite des Mitnehmers 102a' über normalerweise im Eingriff miteinander befindliche Verzahnungen, welche so ausgebildet sind, daß der Mitnehmer 102a' nur dann entgegen der Wirkung der Druckfeder 106' nach unten geschoben wird und die Rutschkupplung auskuppelt, wenn beim Aufwickeln des Hubseils 132' auf einer auf der Wickelwelle 20' befestigten Seilrolle 30' ein für einen zerstörungsfreien Betrieb der Winde noch zulässiger Maximalwert des Antriebsdrehmoments für die Schnecke 24' überschritten wird - die Fig. 1 zeigt nur einen Teil der Verzahnungen der Rutschkupplung 102' mit einem am Mitnehmer 102a' vorgesehenen Zahn.

Außer dem Deckel 12' und dem Gehäuseboden 10a' verfügt das Windengehäuse 10' über ein linkes und ein rechtes Gehäuseteil 14' bzw. 16', in denen Lagerbuchsen 14a' bzw. 16a' zur Lagerung der Wickelwelle 20' befestigt sind. In der Seilrolle 30' ist eine Ringnut 30a' (siehe Fig. 4) ausgebildet, in die sich das Hubseil 132' aufwickeln läßt. Wie die Fig. 4 zeigt, ist das windenseitige Ende des Hubseils 132' mittels eines Nippels 132a' an der Nabe 30b' der Seilrolle 30' fest verankert, und in Fig. 4 wurde die dem Aufwickeln des Hubseils dienende Drehrichtung der Seilrolle mit dem Pfeil R gekennzeichnet.

Am freien Endbereich 132b' des Hubseils 132' ist ein als Ganzes mit 40' bezeichnetes Widerlager angebracht; dieses Widerlager umfaßt ein Tragelement 48' und einen vom Hubseil durchsetzten Schaft 50' mit abgestuftem Außendurchmesser zum Tragen des Tragelements 48', ein am freien Hubseilende befestigtes Widerlagerelement 42' und ein als vom Hubseil durchsetzte Schraubenfeder gestaltetes Federelement 46', welches sich oben am Schaft 50' und unten auf einer Scheibe 44' abstützt, die ihrerseits auf dem Widerlagerelement 42' aufliegt. An seinem oberen Ende ist der Schaft 50' mit einem Ringbund 50a' versehen.

An der Unterseite des Gehäusebodens 10a' ist eine rohrartige Führung 110' befestigt, in deren Achse der freie Endbereich 132b' des Hubseils verläuft, welches von der Seilrolle 30' nach unten durch ein mit einer Austrittsöffnung versehenes Seilführungselement 38' hindurch weggeführt ist. Die Führung 110' dient als Vertikalführung für den Ringbund 50a' des Schafts 50' sowie der horizontalen Führung eines sich horizontal erstreckenden, schieberartigen Riegels 112', welcher eine Öffnung 114' in der Wand der Führung 110' durchgreift und mit seinem gemäß Fig. 3 linken Ende den Schaft 50' unterhalb seines Ringbundes 50a' in nicht näher dargestellter Weise gabelartig über etwas weniger als 180° umfaßt, so daß der Riegel 112 in seiner in Fig. 3 dargestellten Wirkstellung verhindert, daß sich der Ringbund 50a' über den Riegel 112' nach unten hinaus verschieben läßt, insbesondere dann, wenn letzterer in noch zu beschreibender Weise in einer ungefähr horizontalen Lage gehalten wird.

Am Gehäuseboden 10a' ist eine Blattfeder 116' festgelegt, welche in der Wirkstellung des Riegels 112' die in Fig. 3 mit ausgezogenen Linien dargestellte Position einnimmt. Jedoch läßt sich dieser Riegel entgegen der Wirkung der in den Riegel eingehängten und so diesen tragenden Blattfeder 116' gemäß Fig. 3 so weit nach rechts ziehen, daß er den Schaft 50' freigibt und infolgedessen der Ringbund 50a' abgesenkt werden kann; eine solche Verschiebung des Riegels läßt die Gestaltung des Riegels und der Öffnung 114' zu, und in der in Fig. 3 gestrichelt dargestellten rechten Endposition des Riegels 112' nimmt die Blattfeder 116' die in Fig. 3 gleichfalls gestrichelt dargestellte Position ein, weil die Blattfeder und der Riegel auch in horizontaler Richtung miteinander gekoppelt sind.

Dem Zurückziehen des Riegels 112' in horizontaler Richtung gemäß Fig. 3 nach rechts (entgegen der Wirkung der Blattfeder 116') dient ein als doppelarmiger Winkelhebel gestalteter Betätigungshebel 120', welcher am Lagerbock 100a' um eine senkrecht zur Zeichnungsebene der Fig. 3 verlaufende Schwenkachse drehbar gelagert ist. Auch der Betätigungshebel 120' dient durch eine nicht näher dargestellte Gestaltung zusammen mit der Blattfeder 116' und der Öffnung 114' dazu, den Riegel 112' in einer ungefähr horizontalen Lage zu halten. Der Betätigungshebel 120' und der Riegel 112' sind in nicht näher dargestellter Weise so formschlüssig miteinander gekoppelt, daß ein Verschwenken des Betätigungshebels gemäß Fig. 3 im Gegenuhrzeigersinn ein Zurückziehen des Riegels bewirkt und daß ein Vorschieben des Riegels gemäß Fig. 3 nach links (durch die Blattfeder 116') ein Verschwenken des Betätigungshebels im Uhrzeigersinn bewirkt.

Dem Verschwenken des Betätigungshebels 120' gemäß Fig. 3 im Gegenuhrzeigersinn dient eine angenähert topfförmige Sicherungshülse 122', welche unten zwei einander diagonal gegenüberliegende Zungen 122a' und 122b' besitzt, die entsprechende Öffnungen im Gehäuseboden 10a' durchgreifen und so eine Halterung und vertikale Führung der Sicherungshülse im Windengehäuse 10' bewirken und die Sicherungshülse gegen ein Verdrehen sichern. Außerdem hat die Sicherungshülse 122' an ihrem Umfang zwei sich in vertikaler Richtung erstreckende Längsschlitze 122c', in die Nasen der Lagerbuchse 100' eingreifen, um auch letztere gegen ein Verdrehen zu sichern. Durch die Schraubendruckfeder 70' wird die Sicherungshülse 122' nach oben gedrückt, wodurch die Planverzahnung des verschiebbaren Blockierelements 62' im Eingriff mit der an der Unterseite des Deckels 12' vorgesehenen Planverzahnung 60a' gehalten wird. Die Zunge 122a' der Sicherungshülse 122' ist unten z. B. gabelförmig ausgebildet und übergreift den gemäß Fig. 3 linken Arm des Betätigungshebels 120', welcher in dem in Fig. 3 dargestellten Zustand der Winde von unten gegen die Zunge 122a' der Sicherungshülse anliegt, so daß ein Verschieben der letzteren nach unten ein Verschwenken des Betätigungshebels 120' gemäß Fig. 3 im Gegenuhrzeigersinn bewirkt.

Wird nun eine nicht dargestellte Handkurbel von oben auf den Sechskant 78' am oberen Ende der Antriebswelle 18' aufgesetzt, werden die Buchsen 74a' und 74b', das verschiebbare Blockierelement 62' und die Sicherungshülse 122' entgegen der Wirkung der Druckfeder 70' nach unten geschoben; dadurch gibt die Windengehäuse-feste Planverzahnung 60a' das verschiebbare Blockierelement 62' frei, gleichzeitig zieht der Betätigungshebel 120' den Riegel 112' zurück, so daß sich die Antriebswelle 18' drehen und das Ersatzrad-Widerlager 40' absenken läßt. Umgekehrt bewirkt beim Abnehmen der Handkurbel von der Antriebswelle 18' die Druckfeder 70' ein Anheben der Sicherungshülse 122' und des verschiebbaren Blockierelements 62', so daß die Antriebswelle 18' gegen Verdrehen gesichert und der Riegel 112' unter der Wirkung der Blattfeder 116' gemäß Fig. 3 nach links in seine in Fig. 3 mit ausgezogenen Linien dargestellte Wirkstellung vorgeschoben wird, um ein Absenken des Widerlagers 40' zu verhindern, sofern sich der Ringbund 50a' des Schafts 50' oberhalb des Riegels 112' befindet. Wurde durch eine unsachgemäße Betätigung der Winde diese beschädigt, ist also beispielsweise das Hubseil 132' gerissen, kann das vom Widerlager 40' getragene, weggestaute Ersatzrad nicht nach unten fallen.

Erfindungsgemäß ist das linke Gehäuseteil 14' - in einem gemäß Fig. 3 horizontalen Schnitt - ungefähr U-förmig gestaltet und umfaßt die Seilrolle 30' gemäß Fig. 3 vorn und hinten so, daß im Bereich des linken Gehäuseteils 14' das Hubseil 132' nicht aus der Ringnut 30a' der Seilrolle herausspringen kann. Wie die Fig. 3 erkennen läßt, ist das Windengehäuse 10' auch unterhalb der Seilrolle 30' so gestaltet, daß das Hubseil 132' auch unten nicht aus der Ringnut 30a' der Seilrolle 30' herausspringen kann. Wie sich aus dem Folgenden noch ergeben wird, sind auch im oberen Bereich der Seilrolle 30' Mittel vorgesehen, um dort ein Herausspringen des Hubseils aus der Seilrolle zu verhindern.

Zwei am Deckel 12' des Windengehäuses 10' angeschweißte Haltewinkel 150' dienen der Halterung und Lagerung einer als Ganzes mit 152' bezeichneten Überdrehsicherung für die Seilrolle 30'. Diese Überdrehsicherung hat folgenden Aufbau:

Auf einem an den beiden Haltewinkeln 150' angebrachten Rundniet 154' ist eine Sperrklinke 156' schwenkbar gelagert; ferner ist auf dem Rundniet eine Wickelfeder 158' angeordnet, welche sich einerseits am Gehäusedeckel 12' abstützt (siehe Fig. 4) und andererseits auf der Sperrklinke 156' derart, daß sie die Sperrklinke gemäß Fig. 4 im Gegenuhrzeigersinn zu verschwenken versucht. Schließlich ist in der Nabe 30b' der Seilrolle 30' ein Anschlagstift 160' fest angebracht, welcher mit dem freien vorderen Ende der Sperrklinke 156' zusammenwirkt, wenn das Hubseil 132' die Seilrollennabe nicht umschlingt.

Die Funktion der Überdrehsicherung 152' ist also die folgende: Ist das Hubseil 132' ganz oder teilweise auf die Seilrolle 30' aufgewickelt, liegt die Sperrklinke 156' unter der Wirkung der Wickelfeder 158' gegen den Außenumfang des Hubseilwickels an und verhindert so im oberen Bereich der Seilrolle, daß das Hubseil aus der Seilrollenringnut 30a' herausspringen kann. Wird das Hubseil durch Drehen der Seilrolle 30' gemäß Fig. 4 im Uhrzeigersinn von der Seilrolle abgewickelt, verhindert die Sperrklinke 156' ein Weiterdrehen der Seilrolle 30' im Uhrzeigersinn, sobald der in Fig. 4 dargestellte Zustand erreicht ist, d. h. sobald das Hubseil den Anschlagstift 160' freigegeben hat, so daß die gefederte Sperrklinke 156' zur Anlage gegen den Umfang der Seilrollennabe 30b' kommen kann und dann im Zusammenwirken mit dem Anschlagstift 160' eine weitere Drehung der Seilrolle 30' gemäß Fig. 4 im Uhrzeigersinn verhindert.

Bei der erfindungsgemäßen Ersatzradwinde nach den Figuren 3 und 4 ist also nicht nur sichergestellt, daß das Hubseil nicht von der Seilrolle herunterspringen kann, sondern auch, daß eine Beschädigung der Winde durch eine unsachgemäße Betätigung nicht zur Folge haben kann, daß das weggestaute Ersatzrad herunterfällt.

## Patentansprüche

1. Ersatzradwinde zum Anheben eines an der Unterseite eines Fahrzeugbodens unterzubringenden Ersatzrades, mit einer vertikal und damit senkrecht zum Fahrzeugboden verlaufenden Antriebswelle (18), einer durch die letztere über ein Untersetzungsgetriebe (22) antreibbaren Seilrolle oder -trommel (30), auf die ein Hubseil (32') aufwickelbar ist, einem mit dem Fahrzeugboden fest verbindbaren, das Untersetzungsgetriebe sowie die Seilrolle umschließenden Windengehäuse (10), aus dem die Antriebswelle (18) nach oben herausragt, sowie mit einem an einem vertikal verlaufenden, freien Endbereich des Hubseils (32') anbringbaren Widerlager (40) zum Tragen des Ersatzrades, **dadurch gekennzeichnet, daß** die Seilrolle bzw. -trommel (30) auf einer horizontal verlaufenden Wickelwelle (20) angeordnet und mit dieser zumindest drehfest verbunden ist, daß das Untersetzungsgetriebe als Schneckengetriebe (22) mit der Schnecke (24) an der Antriebswelle (18) und dem Schneckenrad (26) an der Wickelwelle (20) ausgebildet ist, und daß die Antriebs- und die Wickelwelle in dem Windengehäuse (10) gelagert sind, welches an seiner Unterseite eine Austrittsöffnung (36) für den vertikal verlaufenden, freien Hubseilendbereich (32') aufweist.

2. Winde nach Anspruch 1, **dadurch gekennzeichnet, daß** das Widerlager (40) ein von unten gegen das Ersatzrad anlegbares Tragelement (48) zum Tragen des Ersatzrades, ein am Hubseil (32) festlegbares Widerlagerelement (42) sowie zwischen diesem und dem Tragelement ein in vertikaler Richtung elastisches Federelement (46) zum Verspannen des Ersatzrades gegen die Fahrzeugunterseite aufweist.

3. Winde nach Anspruch 2, **dadurch gekennzeichnet, daß** das Federelement (46) einen Durchlaß für das Hubseil (32) aufweist.

4. Winde nach einem oder mehreren der Ansprüche 1 bis 3, **gekennzeichnet durch** eine lösbare Blockiervorrichtung (60, 62) für die Antriebswelle (18).

5. Winde nach Anspruch 4, **dadurch gekennzeichnet, daß** die Blockiervorrichtung ein erstes Blockierelement (60; 12') mit einer die Antriebswelle (18; 18') umschließenden Planverzahnung (60a) sowie ein zweites Blockierelement (62; 62') mit wenigstens einem Vorsprung zum Eingreifen in die Planverzahnung aufweist, wobei das eine Blockierelement (60; 12') unverdrehbar gehalten und das andere Blockierelement (62; 62') drehfest mit der Antriebswelle verbunden, jedoch in Achsrichtung der Antriebswelle verschiebbar ist.

6. Winde nach Anspruch 5, **dadurch gekennzeichnet, daß** mindestens die wirksamen Bereiche der beiden Blockierelemente (60, 62; 12', 62') im Windengehäuse (10; 10') angeordnet sind und das eine Blockierelement (60; 12') gehäusefest ist.

7. Winde nach Anspruch 6, **gekennzeichnet durch** eine am oberen Ende der Antriebswelle (18) angeordnete Kurbelansetzstelle (78) zum Aufsetzen einer Antriebskurbel, eine die beiden Blockierelemente (60, 62) in Eingriff miteinander haltende Feder (70) sowie ein **durch** Aufsetzen der Antriebskurbel betätigbares Ausrückelement (74) zum Abheben des verschiebbaren Blockierelements (62) vom anderen Blockierelement (60).

8. Winde nach Anspruch 7, **dadurch gekennzeichnet, daß** das Ausrückelement (74) als an der Antriebswelle (18) längsverschiebbar gelagerte, das Windengehäuse (10) durchsetzende, durch Aufsetzen der Antriebskurbel in Richtung auf das Gehäuseinnere vorschiebbare und dabei das verschiebbare Blockierelement (62) gegen die Wirkung der Feder (70) mitnehmende Buchse ausgebildet ist.

9. Winde nach Anspruch 8, **dadurch gekennzeichnet, daß** das verschiebbare Blockierelement (62) eine von der Antriebswelle (18) durchsetzte Scheibe ist, zwischen der und einem an der Antriebswelle unverschiebbar angebrachten Widerlager (24) eine die Antriebswelle umfassende Druckfeder (70) angeordnet ist.

10. Winde nach Anspruch 9, **dadurch gekennzeichnet, daß** die Schnecke (24) Bestandteil des Federwiderlagers ist.

11. Winde nach einem oder mehreren der Ansprüche 5 bis 10, **dadurch gekennzeichnet, daß** beide Blockierelemente (60, 62) jeweils mit einer die Antriebswelle (18) umschließenden Planverzahnung (60a, 62a) versehen sind.

12. Winde nach einem oder mehreren der vorstehenden Ansprüche, **dadurch gekennzeichnet, daß** zur Verhinderung eines unbeabsichtigten Absenkens des weggestauten Ersatzrades eine unmittelbar mit dem Ersatzrad-Widerlager (40') zusammenwirkende, lösbare Absenksicherung (112') vorgesehen ist.

13. Winde nach Anspruch 12 sowie einem oder mehreren der Ansprüche 4 bis 11, **dadurch gekennzeichnet, daß** die Absenksicherung (112') derart mit der Blockiervorrichtung (60a', 62') gekoppelt ist, daß ein Lösen bzw. Aktivieren der letzteren ein Lösen bzw. Aktivieren der Absenksicherung bewirkt.

14. Winde nach Anspruch 12 oder 13, **dadurch gekennzeichnet, daß** das Ersatzrad-Widerlager (40') einen vom freien Endbereich (132b') des Hubseils (132') durchsetzten Schaft (50') aufweist, an dem ein von unten gegen das Ersatzrad anlegbarer Ersatzradträger (48') vorgesehen ist, daß am Windengehäuse (10') eine vertikal nach unten verlaufende gehäusefeste Führung (110') vorgesehen ist, in welche der Widerlagerschaft (50') von unten einfahrbar ist und bei weggestautem Ersatzrad eingreift, und daß die Absenksicherung einen in die Widerlagerschaft-Führung (110') hineinbewegbaren Riegel (112') zum Untergreifen eines am Widerlagerschaft vorgesehenen Anschlags (50a') aufweist.

15. Winde nach Anspruch 14, **gekennzeichnet durch** eine den Riegel (112') in Richtung auf seine Wirkstellung vorspannende Feder (116').

16. Winde nach einem oder mehreren der vorstehenden Ansprüche, **gekennzeichnet durch** eine das an der Seilrolle bzw. -trommel (30') erzeugbare Drehmoment begrenzende, nur in Hubrichtung wirksame Rutschkupplung (102') zwischen Antriebswelle (18') und Seilrolle bzw. -trommel (30').

17. Winde nach Anspruch 16, **dadurch gekennzeichnet, daß** die Rutschkupplung (102') zwischen Antriebswelle (18') und der auf letzterer drehbar gelagerten Schnecke (24') vorgesehen ist.

18. Winde nach einem oder mehreren der vorstehenden Ansprüche, **gekennzeichnet durch** eine ein Herausspringen des Hubseils (132') aus der Seilrolle bzw. -trommel (30') verhindernde Hubseilsicherung (14', 10a', 156').

19. Winde nach einem oder mehreren der vorstehenden Ansprüche, **gekennzeichnet durch** eine bei abgelassenem Ersatzrad wirksam werdende Überdrehsicherung (156', 158', 160') für die Seilrolle bzw. -trommel (30').

20. Winde nach Anspruch 19, **dadurch gekennzeichnet, daß** die Überdrehsicherung eine mit der Seilrolle bzw. -trommel (30') zusammenwirkende Sperrklinke (156') aufweist, welche an einem Windengehäuse-festen Teil (154') in Richtung auf eine Klinken-Wirkstellung beweglich gehalten ist, daß eine die Sperrklinke in Richtung auf deren Wirkstellung vorspannende Klinkenfeder (158') vorgesehen ist, unter deren Wirkung die Sperrklinke bei die Seilrolle bzw. -trommel umschlingendem Hubseil (132') gegen letzteres anliegt, daß an der Seilrolle bzw. -trommel ein Anschlag (160') zum Zusammenwirken mit der Sperrklinke derart angeordnet ist, daß das die Seilrolle bzw. -trommel umschlingende Hubseil den Anschlag abdeckt sowie bei abgelassenem Ersatzrad freilegt und daß bei freiliegendem Anschlag ein Weiterdrehen der Seilrolle bzw. -trommel in Abwickelrichtung durch die Sperrklinke verhinderbar ist.

21. Winde nach Anspruch 20, **dadurch gekennzeichnet, daß** die Sperrklinke (156') um eine Windengehäuse-feste Klinkenachse (160'), welche parallel zur Seilrollenachse verläuft, schwenkbar und entgegen der Abwickelrichtung orientiert ist.

## Claims

1. Winch for a spare wheel for lifting a spare wheel that is to be stowed on the underside of a vehicle floor, comprising a driving shaft (18) extending vertically and hence perpendicularly to the vehicle floor, a cable roll or drum (30) drivable by the driving shaft via a reduction gearing (22), a hoist cable (32) being windable onto the cable roll or drum, a winch housing (10) firmly securable to the vehicle floor and enclosing the reduction gearing and the cable roll, the driving shaft (18) protruding upwards out of the winch housing, and an abutment (40) for carrying the spare wheel, the abutment being attachable to a vertically extending, free end area of the hoist cable (32'), **characterized in that** the cable roll or drum (30) is arranged on a horizontally extending winding shaft (20) and is at least rotationally fixedly connected thereto, **in that** the reduction gearing is designed as worm gear (22) with the worm (24) on the driving shaft (18) and the worm wheel (26) on the winding shaft (20), and **in that** the driving shaft and the winding shaft are mounted in the winch housing (10) which has on its underside an outlet opening (36) for the free hoist cable end area (32') extending vertically.

2. Winch in accordance with Claim 1, **characterized in that** the abutment (40) comprises a carrying element (48) for carrying the spare wheel, the carrying element being designed to be placed against the spare wheel from below, an abutment element (42) securable on the hoist cable (32), and between the abutment element and the carrying element a spring element (46) for tightening the spare wheel against the underside of the vehicle, the spring element being elastic in vertical direction.

3. Winch in accordance with Claim 2, **characterized in that** the spring element (46) has an opening for passage of the hoist cable (32) therethrough.

4. Winch in accordance with any one or several of Claims 1 to 3, **characterized by** a releasable blocking device (60, 62) for the driving shaft (18).

5. Winch in accordance with Claim 4, **characterized in that** the blocking device comprises a first blocking element (60; 12') with a crown toothing (60a) enclosing the driving shaft (18; 18'), and a second blocking element (62; 62') with at least one projection for engagement with the crown toothing, one blocking element (60; 12') being held non-rotatably and the other blocking element (62; 62') being rotationally fixedly connected to the driving shaft, but displaceable in axial direction of the driving shaft.

6. Winch in accordance with Claim 5, **characterized in that** at least the operative areas of the two blocking elements (60, 62; 12', 62') are arranged in the winch housing (10; 10'), and one blocking element (60; 12') is fixed on the housing.

7. Winch in accordance with Claim 6, **characterized by** a crank attachment point (78) arranged at the upper end of the driving shaft (18) for attachment of a driving crank thereto, a spring (70) holding the two blocking elements (60, 62) in engagement with one another, and a disengagement element (74) actuatable by attachment of the driving crank for lifting the displaceable blocking element (62) off of the other blocking element (60).

8. Winch in accordance with Claim 7, **characterized in that** the disengagement element (74) is designed as a bushing mounted for longitudinal displacement on the driving shaft (18), the bushing extending through the winch housing (10) and being advanceable in a direction towards the housing interior by attachment of the driving crank and thereby taking along the displaceable blocking element (62) against the action of the spring (70).

9. Winch in accordance with Claim 8, **characterized in that** the displaceable blocking element (62) is a disc through which the driving shaft (18) extends, and a compression spring (70) embracing the driving shaft is arranged between the disc and an abutment (24) immovably attached to the driving shaft.

10. Winch in accordance with Claim 9, **characterized in that** the worm (24) is a component of the spring abutment.

11. Winch in accordance with any one or several of Claims 5 to 10, **characterized in that** the two blocking elements (60, 62) are each provided with a crown toothing (60a, 62a) enclosing the driving shaft (18).

12. Winch in accordance with any one or several of the preceding claims, **characterized in that** a releasable lowering prevention device (112') cooperating directly with the spare wheel abutment (40') is provided to prevent unintentional lowering of the stowed away spare wheel.

13. Winch in accordance with Claim 12 and any one or several of Claims 4 to 11, **characterized in that** the lowering prevention device (112') is coupled with the blocking device (60a', 62') such that release and activation of the blocking device causes release and activation, respectively, of the lowering prevention device.

14. Winch in accordance with Claim 12 or 13, **characterized in that** the spare wheel abutment (40') comprises a shaft (50') through which the free end area (132b') of the hoist cable (132') extends, and on which a spare wheel carrier (48') is provided, the spare wheel carrier being designed to be placed against the spare wheel from below, **in that** there is provided on the winch housing (10') a vertically downwardly extending guide (110') which is fixed on the housing and into which the abutment shaft (50') is drivable from below for engagement therewith when the spare wheel is stowed away, and **in that** the lowering prevention device comprises a locking bolt (112') moveable into the abutment shaft guide (110') for engagement underneath a stop (50a') provided on the abutment shaft.

15. Winch in accordance with Claim 14, **characterized by** a spring (116') biasing the locking bolt (112') in a direction towards its operative position.

16. Winch in accordance with any one or several of the preceding claims, **characterized by** a slip coupling (102') between driving shaft (18') and cable roll or drum (30'), the slip coupling being operative in lifting direction only and delimiting the torque generatable at the cable roll or drum (30').

17. Winch in accordance with Claim 16, **characterized in that** the slip coupling (102 ') is provided between the driving shaft (18') and the worm (24') rotatably mounted on the driving shaft (18').

18. Winch in accordance with any one or several of the preceding claims, **characterized by** a hoist cable securing device (14', 10a', 156') for preventing the hoist cable (132') from slipping out of the cable roll or drum (30').

19. Winch in accordance with any one or several of the preceding claims, **characterized by** an overturn prevention device (156', 158', 160') for the cable roll or drum (30'), which becomes operative when the spare wheel is let down.

20. Winch in accordance with Claim 19, **characterized in that** the overturn prevention device comprises a detent pawl (156') which cooperates with the cable roll or drum (30') and is held on a part (154') fixed on the winch housing for movement in a direction towards a pawl operative position, **in that** a pawl spring (158') biasing the detent pawl in a direction towards its operative position is provided, the detent pawl resting against the hoist cable (132') under the action of the pawl spring (158') when the hoist cable (132') is wound around the cable roll or drum, **in that** a stop (160') for cooperation with the detent pawl is arranged on the cable roll or drum such that the hoist cable wound around the cable roll or drum covers the stop and exposes the stop when the spare wheel is let down and such that further turning of the cable roll or drum in an unwinding direction is preventable by the detent pawl when the stop is exposed.

21. Winch in accordance with Claim 20, **characterized in that** the detent pawl (156') is pivotable about a pawl axis (160') which is fixed on the winch housing and extends parallel to the cable roll axis, and the detent pawl (156') is orientated in a direction opposite to the unwinding direction.

## Revendications

1. Treuil pour roue de secours, servant à soulever une roue de secours devant être logée sur la face inférieure d'un plancher de véhicule, comportant un arbre d'entraînement (18) qui s'étend verticalement et par conséquent perpendiculairement au plancher du véhicule, un rouleau ou tambour à câble (30) pouvant être entraîné par l'arbre d'entraînement par l'intermédiaire d'un mécanisme de démultiplication (22) et sur lequel peut être enroulé un câble de levage (32'), un boîtier de treuil (10) qui peut être relié de façon fixe au plancher du véhicule et entoure le mécanisme de démultiplication ainsi que le rouleau à câble et hors duquel l'arbre d'entraînement (18) fait saillie vers le haut, ainsi qu'une butée (40) qui peut être appliquée sur une partie d'extrémité libre qui s'étend verticalement, du câble de levage (32'), pour supporter la roue de secours; **caractérisé en ce que** le rouleau ou tambour à câble (30) est disposé sur un arbre d'enroulement (20) qui s'étend horizontalement et est relié à ce dernier au moins solidairement en rotation, que le mécanisme de démultiplication est agencé sous la forme d'un mécanisme à vis sans fin (22) comprenant la vis sans fin (24) montée sur l'arbre d'entraînement (18) et la roue tangente (26) montée sur l'arbre d'enroulement (20), et que l'arbre d'entraînement et l'arbre d'enroulement sont montés dans le boîtier (10) du treuil qui comporte, sur sa face inférieure, une ouverture de sortie (36) pour la partie d'extrémité verticale libre (32') du câble de levage.

2. Treuil selon la revendication 1, **caractérisé en ce que** la butée (40) comporte un élément de support (48) pouvant être appliqué à partir du bas contre la roue de secours pour supporter la roue de secours, un élément de butée (42) pouvant être fixé au câble de levage (32), ainsi qu'un élément de ressort (46) élastique dans la direction verticale, situé entre l'élément de butée et l'élément de support et servant à serrer la roue de secours contre la face inférieure du véhicule.

3. Treuil selon la revendication 2, **caractérisé en ce que** l'élément de ressort (46) comporte un passage pour le câble de levage (32).

4. Treuil selon une ou plusieurs des revendications 1 à 3, **caractérisé par** un dispositif de blocage amovible (60, 62) pour l'arbre d'entraînement (18).

5. Treuil selon la revendication 4, **caractérisé en ce que** le dispositif de blocage comporte un premier élément de blocage (60; 12'), une denture plane (60a) qui entoure l'arbre d'entraînement (18, 18') ainsi qu'un second élément de blocage (62; 62') comportant au moins une partie saillante destinée à s'engager dans la denture plane, l'élément de blocage (60; 12') étant retenu sans possibilité de rotation et l'autre élément de blocage (62; 60') étant relié solidairement en rotation à l'arbre d'entraînement, mais pouvant se déplacer dans une direction axiale de l'arbre d'entraînement.

6. Treuil selon la revendication 5, **caractérisé en ce qu'**au moins les parties actives des deux éléments de blocage (62; 60') sont disposés dans le boîtier (10; 10') du treuil et que l'élément de blocage (60; 12') est solidaire du boîtier.

7. Treuil selon la revendication 6, **caractérisé par** un point de montage de manivelle (78) qui est disposé sur l'extrémité supérieure de l'arbre d'entraînement (18) et est utilisé pour le montage d'une manivelle d'entraînement, un ressort (70), qui retient à l'état réciproquement engrené les deux éléments de blocage (60; 62), ainsi qu'un élément de dégagement (74) pouvant être actionné par la mise en place de la manivelle d'entraînement pour écarter l'élément de blocage déplaçable (62) de l'autre élément de blocage (60).

8. Treuil selon la revendication 7, **caractérisé en ce que** l'élément de dégagement (74) est agencé sous la forme d'une douille qui est montée de manière à être déplaçable longitudinalement sur l'arbre d'entraînement (18), traverse le boîtier (10) du treuil, peut avancer en direction de l'intérieur du boîtier sous l'effet de la mise en place de la manivelle d'entraînement et entraîne l'élément de blocage pouvant être déplacé (62) à l'encontre du ressort (70).

9. Treuil selon la revendication 8, **caractérisé en ce que** l'élément de blocage déplaçable (62) est un disque, qui traverse l'arbre d'entraînement (18) et le ressort de pression (70) entourant l'arbre d'entraînement est disposé entre le disque et une butée (24) montée de façon immobile sur l'arbre d'entraînement.

10. Treuil selon la revendication 9, **caractérisé en ce que** la roue tangente (24) fait partie de la butée de ressort.

11. Treuil selon une ou plusieurs des revendications 5 à 10, **caractérisé en ce que** les deux éléments de blocage (60, 62) comportent chacun une denture plane (60a, 62a) qui entoure l'arbre d'entraînement (18).

12. Treuil selon une ou plusieurs des revendications précédentes, **caractérisé en ce que** pour empêcher un abaissement intempestif de la roue de secours arrimée, il est prévu un dispositif amovible (112) de protection contre un abaissement, qui coopère directement avec la butée (40') de la roue de secours.

13. Treuil selon la revendication 12, ainsi que selon une ou plusieurs des revendications 4 à 11, **caractérisé en ce que** le dispositif (112') de protection contre un abaissement est couplé au dispositif de blocage (60a'; 62') de telle sorte qu'un desserrage ou une activation de ce dispositif entraîne un desserrage ou une activation du dispositif de protection contre un abaissement.

14. Treuil selon la revendication 12 ou 13, **caractérisé en ce que** la butée (40') de la roue de secours comporte une tige traversante (50'), qui s'étend à partir d'une partie d'extrémité libre (132b') du câble de levage (132') et sur laquelle est prévu un support de roue de secours (48') qui peut être appliqué à partir du bas contre la roue de secours, que sur le boîtier (10') du treuil il est prévu un guide (110'), qui s'étend verticalement vers le bas, est solidaire du boîtier et dans lequel la tige de butée (50') peut être introduite à partir du bas et s'engage lorsque la roue de secours est arrimée, et que le dispositif de protection contre un abaissement comporte un verrou (112'), qui peut être introduit dans le guide (110') de la tige de butée pour s'engager au-dessous d'une butée (50a') prévue sur la tige de butée.

15. Treuil selon la revendication 14, **caractérisé par** un ressort (112') qui précontraint le verrou (112') en direction de sa position active.

16. Treuil selon une ou plusieurs des revendications précédentes, **caractérisé par** un accouplement patinant (102') qui limite le couple pouvant être produit au niveau du tambour ou rouleau à câble (30') et agit uniquement dans la direction de levage, et qui est disposé entre l'arbre d'entraînement (18') et le rouleau ou tambour à câble (30').

17. Treuil selon la revendication 16, **caractérisé en ce que** l'accouplement patinant (102') est prévu entre l'arbre d'entraînement (18') et la roue tangente (24') montée de manière à pouvoir tourner sur cet arbre.

18. Treuil selon une ou plusieurs des revendications précédentes, **caractérisé par** un dispositif de sécurité (14', 10a'; 156') pour le câble de levage, qui empêche un dégagement brusque du câble de levage (132') à partir du rouleau ou tambour à câble (30').

19. Treuil selon une ou plusieurs des revendications précédentes, **caractérisé par** un dispositif (156', 158', 160') de protection contre un foirage, qui devient actif lorsque la roue de secours est retirée, pour le rouleau ou le tambour à câble (30').

20. Treuil selon la revendication 19, **caractérisé en ce que** le dispositif de protection contre un foirage comporte un cliquet de blocage (156'), qui coopère avec le rouleau ou le tambour à câble (30') et qui est retenu sur une partie (154') solidaire du boîtier du treuil, de manière à être mobile en direction d'une position active du cliquet, il est prévu un ressort de cliquet (158') qui précontraint le cliquet de blocage en direction de sa position active et sous l'action duquel le cliquet de blocage s'applique contre le câble de levage (132') lorsque ce câble entoure le rouleau ou tambour à câble, qu'une butée (160') destinée à coopérer avec le cliquet de blocage est disposée sur le rouleau ou tambour à câble de telle sorte que le câble de levage, qui entoure le rouleau ou tambour à câble, recouvre la butée et libère la butée lorsque la roue de secours est retirée et que lorsque la butée est libre, la poursuite d'une rotation du rouleau ou tambour à câble dans le sens du déroulement peut être empêchée par le cliquet de blocage.

21. Treuil selon la revendication 20, **caractérisé en ce que** le cliquet de blocage (156') peut pivoter autour de son axe (160'), qui est solidaire du boîtier du treuil et s'étend parallèlement à l'axe du rouleau à câble, et est orienté en sens opposé de la direction de roulement.
